# EUROPEAN PATENT SPECIFICATION

(11) **EP 4 627 433 B1**
(45) Date of publication and mention of the grant of the patent: **14.10.2026**
(21) Application number: 23809227.4
(22) Date of filing: 20.11.2023
(51) Int. Cl.: G06F 3/04842, G06F 3/04883, G06F 3/04845, G06F 3/0486, G06F 40/171

(54) **SELECTING HANDWRITTEN OBJECTS**
AUSWAHL HANDGESCHRIEBENER OBJEKTE
SÉLECTION D'OBJETS MANUSCRITS

(30) Priority: 02.12.2022 EP 22306776
(43) Date of publication of application: 08.10.2025
(73) Proprietor: MyScript, 44339 Nantes Cedex 3 (FR)
(72) Inventor: MÉLINAND, Robin, 44339 NANTES Cedex 3 (FR); LELORE, Thibault, 44339 NANTES CEDEX 3 (FR)
(74) Representative: RVDB Nantes
(86) International application number: PCT/EP2023/082426
(87) International publication number: WO 2024/115177

(56) References cited:
- EP-A1- 4 047 465
- US-A- 5 523 775
- US-A1- 2014 143 721
- US-A1- 2021 089 801

## Description

### Field of the invention

The present disclosure relates generally to the field of computing device interfaces capable of recognizing user input handwriting of various graphics and text. In particular, the present disclosure concerns computing devices and corresponding methods for detecting and processing input handwritten elements.

### Background

Computing devices continue to become more ubiquitous in daily life. They may take various forms such as computer desktops, laptops, tablet PCs, hybrid computers (2-in-Is), e-book readers, mobile phones, smartphones, wearable computers (including smartwatches, smart glasses/headsets), global positioning system (GPS) units, enterprise digital assistants (EDAs), personal digital assistants (PDAs), game consoles, and the like. Further, computing devices are being incorporated into vehicles and equipment, such as cars, trucks, farm equipment, manufacturing equipment, building environment control (e.g., lighting, HVAC), and home and commercial appliances.

Computing devices generally consist of at least one processing element, such as a central processing unit (CPU), some form of memory, and input and output devices. The variety of computing devices and their subsequent uses necessitate a variety of input devices and interfaces to allow users to interact with their computing devices. One such input device is a touch sensitive surface such as a touchscreen or touchpad wherein the user input is received through contact between a user body part (e.g. a finger) or an instrument (e.g. a pen or stylus), and the touch sensitive surface. Another input device is an input surface that senses gestures made by a user above the input surface. A further input device is a position detection system which detects the relative position of either touch or non-touch interactions with a non-touch physical or virtual surface. Any of these methods of input can be used generally for drawing or inputting text. The user's handwriting is interpreted using a handwriting recognition system or method.

Handwriting recognition can be implemented in computing devices to input and process various types of handwritten input elements, hand-drawn or handwritten by a user, such as text content (e.g., alphanumeric characters) or non-text content (e.g., shapes, drawings). Once inputted on a computing device, the input elements are usually displayed as digital ink and undergo handwriting recognition to be manipulated as objects, for example text objects such as characters, words, lines or paragraphs or non-text objects such as primitives or shapes. The user handwriting input is typically interpreted using a real-time handwriting recognition system or method. To this end, either on-line systems (recognition carried out using a cloud-based solution or the like) or off-line systems may be used.

The user input may be drawings, diagrams or any other content of text, non-text or mixed content of text and non-text. Handwriting input may be made on a structured document according to guiding lines (base lines) which guide and constraint input by the user. Alternatively, a user may handwrite in free-mode, i.e. without any constraints of lines to follow or input size to comply with (e.g. on a blank page).

In handwriting recognition applications, it is usually possible to perform some level of editing on user input displayed on a computing device. Conventionally, such applications are however limited in their capabilities to handle editing functions and typically constrain users to adopt behaviors or accept compromises which do not reflect the user's original intent. As a result, some conventional handwritten recognition applications force users to navigate menus to select and edit ink elements.

Typically, the ability in conventional handwriting recognition applications to rearrange text or non-text ink input elements is limited where only certain operations are available, often involving complex or unnatural manipulations by the users. As such, it is generally difficult for users to edit text or non-text context in an ergonomic and efficient manner.

In particular, when various graphical objects are displayed on a screen, it is often difficult for a user to select graphical objects, for the purpose of editing for instance. Computing devices running handwriting recognition applications generally do not permit easy and intuitive selection of graphical objects. It is thus fastidious for users to manipulate text and non-text content displayed on a screen.

Improvements are desired to allow easy and intuitive selection of graphical objects (either text and/or non-text) on a computing device.

The document US 2021/0089801 A1 discloses a method on a computing device comprising: displaying in a display area graphical objects, this display area comprising a structured text section with text objects and block sections with text or non-text objects; locating an initiation point from which starts a user selection gesture; determining a selection path forming a selection area; and selecting each graphical object contained within the selection area. The method further discloses that if the initiation point is located in the structured text section, a first mode may be selected thereby allowing the selection path to be drawn in the display area to select any graphical object. If the initiation point is located within a target block section among the block sections, a second mode may be selected, thereby confining the selection path within the target block section.

### Summary of the invention

The present invention allows selection of handwritten input elements using an intuitive selection tool, such as a lasso selection tool, which gives easy and quick access to the selection function together with an accurate assessment of the scope of the selection. The new features detailed below provide a new controlling mode to a user interacting with handwritten input elements, irregular by nature.

The examples of the present invention that are described herein below provide a computing device and corresponding method for editing handwritten input elements of an electronic document.

According to a particular aspect, the invention provides a method as defined in appended claim 1 and implemented by the computing device comprising: displaying, on the display area, a first handwritten input element and a second handwritten input element; detecting, on an input interface, a user selection gesture defining a selection area enclosing at least part of the first handwritten input element and at least part of the second handwritten input element; selecting an object semantic level wherein the first and second handwritten input elements are recognized as at least one first object and at least one second object of the selected semantic level; selecting the recognized objects, wherein selecting comprises: calculating a first coverage of the enclosed part of the first object and a second coverage of the enclosed part of the second object; setting a reference coverage to be equal to the highest coverage between the first and the second coverage; calculating a selection threshold as a function of the reference coverage; comparing the calculated first and second coverages to the selection threshold; identifying at least one calculated coverage being higher than the selection threshold; selecting the objects with said calculated coverage; and thereby editing the selected objects of the electronic document.

The core of the invention confers a smart estimation of the extent of the selection within the selection area by evaluating the broader selection scope and discarding irrelevant objects even partly enclosed in the selection area. The selection of objects is controlled at the gesture level without the need to go through a menu or a switch of tools granting swiftness and precision to the user.

According to a particular embodiment, one or more of the recognized first and second objects are text objects including sub-strokes, characters, words, lines and/or paragraphs.

According to a particular embodiment, one or more of the recognized first and second objects are non-text objects including primitives, shapes, containers and/or diagrams.

The recognition of the handwritten elements allows diverse content of text and non-text input elements to be manipulated according to the same method.

According to a particular embodiment, the calculating of the first and second coverages, comprises: identifying full lengths of the recognized objects; identifying partial lengths of the enclosed part of the recognized objects; calculating the coverages of the enclosed part of the recognized objects by dividing the partial lengths by the respective full lengths.

According to a particular embodiment, the full length of the recognized object is identified by the path of the recognized object and the partial length is identified by the path of the recognized object enclosed within the selection area.

The new features of the present method enable quick and accurate text selection in a paragraph object even in the presence of ascenders/descenders and diacritics.

The new feature of the present method enables quick and accurate selection of enclosing shapes without selecting their content such as text.

According to a particular embodiment, the selecting of the object semantic level comprises setting the object semantic level to an initial semantic level, wherein the selecting of the recognized objects, is performed according to the initial semantic level.

According to a particular embodiment, the selecting of the object semantic level further comprises selecting a next semantic level and performing the selecting of the recognized objects according to next semantic levels until no calculated coverage is identified.

According to a particular embodiment, the semantic levels belong to a set of semantic levels, wherein the objects of the initial semantic level comprise sub-strokes or primitives.

According to a particular embodiment, the objects of the semantic level next to the initial comprise recognized characters or shapes composed of the recognized objects of the initial semantic level.

According to a particular embodiment, the text objects of the next semantic levels comprise, in ascending order, recognized words, lines and paragraphs composed of the recognized objects of the prior semantic levels.

According to a particular embodiment, the non-text objects of the next semantic levels comprise, in ascending order, recognized shapes, containers and diagrams composed of the recognized objects of the prior semantic levels.

According to a particular embodiment, the full length of the recognized object is the number of sub-objects composing the recognized object and the partial length is identified as the number of sub-objects that would be selected at the prior semantic level.

Complex objects are typically composed of a combination of sub-objects (for example: paragraphs composed of lines, lines composed of words etc.). By considering numbers of sub-objects instead of path length, selection is performed in a way that is more compliant with the design characteristics of such complex representations. According to another aspect, the present invention relates to a computing device for editing handwritten input elements of an electronic document, the computing device defined in appended claim 12 and comprising:
- a display area configured to display a first handwritten input element and a second handwritten input element;
- an input interface configured to detect a user selection gesture defining a selection area enclosing at least part of the first handwritten input element and at least part of the second handwritten input element;
- a semantic level selecting module configured to select a semantic level wherein the first and second handwritten input elements are recognized as at least one first object and at least one second object of the selected semantic level;
- an object selecting module configured to select the recognized objects, wherein the object selecting module comprises
   o a coverage calculating module configured to calculate a first coverage of the enclosed part of the first object and a second coverage of the enclosed part of the second object;
   o a reference setting module configured to set a reference coverage to be equal to the highest coverage between the first and the second coverage;
   o a threshold calculating module configured to calculate a selection threshold as a function of the reference coverage;
   o a comparison module configured to compare the calculated first and second coverages to the selection threshold;
   o a coverage identifying module configured to identify at least one calculated coverage being higher than the selection threshold;
- editing the selected objects of the electronic document.

According to other embodiments, the coverage calculating module comprises: a full-length identifying module configured to identify full lengths of the recognized objects; a partial length identifying module configured to identify partial lengths of the enclosed part of the recognized objects; a dividing module configured for calculating the coverages of the enclosed part of the recognized objects by dividing the partial lengths by the respective full lengths.

According to another embodiment, the semantic level selecting module comprises a semantic level setting module configured to set the object semantic level to an initial semantic level.

According to another embodiment, the semantic level selecting module further comprises a next semantic level selecting module configured to perform the selecting of the recognized objects according to next semantic levels until no calculated coverage is identified.

### Brief description of the drawings

The present system and method will be more fully understood from the following detailed description of the examples thereof, taken together with the drawings. In the drawings like reference numerals depict like elements. In the drawings:
Figure 1 shows a block diagram of a computing device in accordance with an embodiment of the present invention.
Figure 2 shows a flow diagram of an example of the present method for editing the handwritten input elements of an electronic document.
Figure 3A shows example handwritten input text to an input area including a user selection gesture detected on the input interface by the computing device.
Figure 3B shows the example of the handwritten input text of figure 3A including selection of enclosed handwritten input characters according to an embodiment of the present invention and a user moving gesture detected on the input interface.
Figure 3C shows resulting handwritten input characters of figures 3A and 3B selected and edited according to an embodiment of the present invention.
Figure 4A shows an example handwritten input text to an input area including a user selection gesture detected on the input interface by the computing device.
Figure 4B shows the example of the handwritten input text of figure 4A including selection of enclosed handwritten input words according to an embodiment of the present invention and a user moving gesture detected on the input interface.
Figure 4C shows resulting handwritten input words of figures 4A and 4B selected and edited according to an embodiment of the present invention.
Figure 4D shows an example the handwritten input text of figure 4A including selection of enclosed handwritten input sub-strokes according to an embodiment of the present invention.
Figure 4E shows an example the handwritten input text of figure 4A including selection of enclosed handwritten input characters according to an embodiment of the present invention.
Figure 5A shows example handwritten input mixed content as text and non-text to an input area including a user selection gesture detected on the input interface by the computing device.
Figure 5B shows the example of the handwritten input mixed content of figure 5A including selection of enclosed handwritten input elements, including words and shapes, according to an embodiment of the present invention and a user moving gesture detected on the input interface.
Figure 5C shows resulting handwritten input mixed content of figures 5A and 5B selected and edited according to an embodiment of the present invention.
Figure 6A shows example handwritten input mixed content as text and non-text to an input area including a user selection gesture detected on the input interface by the computing device.
Figure 6B shows the example of the handwritten input mixed content of figure 6A including selection of enclosed handwritten input elements, including characters and primitives, according to an embodiment of the present invention and a user moving gesture detected on the input interface.
Figure 6C shows resulting handwritten input mixed content of figures 6A and 6B selected and edited according to an embodiment of the present invention.

### Detailed description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, and/or components are described at a relatively high-level, without detail, in order to avoid unnecessarily obscuring aspects of the present teachings.

The following description of the exemplary embodiments refers to the accompanying drawings. The following detailed description does not limit the invention. Instead, the scope of the invention is defined by the appended claims. In various embodiments as illustrated in the figures, a computing device and a corresponding method are discussed.

The use of the term "text" in the present description is understood as encompassing all characters (e.g. alphanumeric characters or the like), and strings thereof, in any written language and any symbols used in written text.

The term "non-text" in the present description is understood as encompassing freeform handwritten or hand-drawn content (e.g. shapes, drawings, etc.) and image data. Non-text content defines graphic or geometric formations in linear or non-linear configurations, including containers, drawings, common shapes (e.g. arrows, blocks, etc.) or the like.

Furthermore, the examples shown in these drawings are in a left-to-right written language context, and therefore any reference to positions can be adapted for written languages having different directional formats.

The various technologies described herein generally relate to capture, processing and management of hand-drawn or handwritten content on portable and non-portable computing devices. The systems and methods described herein may utilize recognition of user's natural writing and drawing styles input to a computing device via an input surface, such as a touch sensitive screen (as discussed later). Whilst the various embodiments are described with respect to recognition of digital ink handwriting input using so-called online recognition techniques, it is understood that application is possible to other forms of input for recognition, such as offline recognition involving a remote device or server to perform recognition.

The terms "hand-drawing" and "handwriting" are used interchangeably herein to define the creating of digital contents by users through use of their hands (or fingers) or an input device (hand-held stylus or digital pen, mouse...) on or with an input surface. The term "hand" or the like is used herein to provide concise description of the input techniques, however the use of other parts of a user's body for similar input is included in this definition, such as foot, mouth and eye.

The systems and methods described herein may utilize recognition of users' natural writing or drawing styles input to a computing device via an input interface, such as a touch sensitive screen, connected to, or of, the computing device or via an input device, such as a digital pen or mouse, connected to the computing device. Whilst the various examples are described with respect to recognition of handwriting input using so-called online recognition techniques, it is understood that application is possible to other forms of input for recognition, such as offline recognition in which images rather than digital ink are recognized.

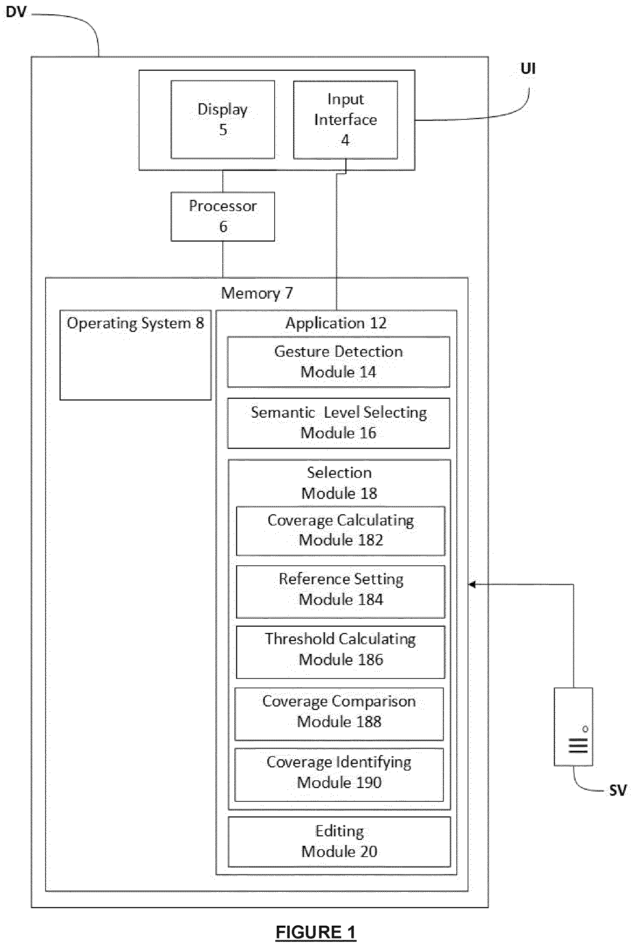

Figure 1 shows a block diagram of a system, comprising a computing device DV, for interacting, on a display area, with handwritten input elements.

The computing device (or digital device) DV may be a computer desktop, laptop computer, tablet computer, e-book reader, mobile phone, smartphone, wearable computer, digital watch, interactive whiteboard, global positioning system (GPS) unit, enterprise digital assistant (EDA), personal digital assistant (PDA), game console, or the like. The computing device DV includes components of at least one processing elements, some form of memory and input and output (I/O) devices. The components communicate with each other through inputs and outputs, such as connectors, lines, buses, links networks, or others known to the skilled person.

The illustrated example of the computing device DV has at least one display 5 for outputting data from the computing device such as images, text, and video. The display 5 may use LCD, plasma, LED, OLED, CRT, or any other appropriate technology that is or is not touch sensitive as known to those of ordinary skill in the art. At least some of the display 5 is co-located with at least one input area 4. The input area 4 may employ technology such as resistive, surface acoustic wave, capacitive, infrared grid, infrared acrylic projection, optical imaging, dispersive signal technology, acoustic pulse recognition, or any other appropriate technology as known to those of ordinary skill in the art to receive user input. The input area 4 may be bounded by a permanent or video-generated border that clearly identifies its boundaries. Instead of, or additional to, an on-board display, the computing device DV may have a projected display capability.

The computing device DV also includes a processor 6, which is a hardware device for executing software, particularly software stored in memory 7. The processor can be any custom made or commercially available general purpose processor, a central processing unit (CPU), commercially available microprocessors including a semiconductor based microprocessor (in the form of a microchip or chipset), microcontroller, digital signal processor (DSP), application specific integrated circuit (ASIC), field programmable gate array (FPGA) or other programmable logic device, discrete gate or transistor logic, discrete hardware components, state machine, or any combination thereof designed for executing software instructions known to those of ordinary skill in the art.

The memory 7 can include any one or a combination of volatile memory elements (e.g., random access memory (RAM, such as DRAM, SRAM, or SDRAM)) and nonvolatile memory elements (e.g., ROM, EPROM, flash PROM, EEPROM, hard drive, magnetic or optical tape, memory registers, CD-ROM, WORM, DVD, redundant array of inexpensive disks (RAID), another direct access storage device (DASD), or any other magnetic, resistive or phase-change nonvolatile memory). Moreover, the memory 7 may incorporate electronic, magnetic, optical, and/or other types of storage media. The memory 7 can have a distributed architecture where various components are situated remote from one another but can also be accessed by the processor 6. Further, the memory 7 may be remote from the device, such as at a server or cloud-based system, which is remotely accessible by the computing device DV. The memory 7 is coupled to the processor 6, so the processor 6 can read information from and write information to the memory 7. In the alternative, the memory 7 may be integral to the processor 6. In another example, the processor 6 and the memory 7 may both reside in a single ASIC or other integrated circuit.

The software in the memory 7 includes an operating system 8 and an application 12 in the form of a non- transitory computer readable medium having a computer readable program code embodied therein. The operating system 8 controls the execution of the application 12. The operating system 8 may be any proprietary operating system or a commercially or freely available operating system, such as WEBOS, WINDOWS^{®}, MAC and IPHONE OS^{®}, LINUX, and ANDROID. It is understood that other operating systems may also be utilized. Alternatively, the application 12 of the present system and method may be provided without use of an operating system.

The application 12 includes one or more processing elements related to detection, management and treatment of user input (discussed in detail later). The software may also include one or more other applications related to handwriting recognition (HWR), different functions, or both. Some examples of other applications include a text editor, telephone dialer, contacts directory, instant messaging facility, computer-aided design (CAD) program, email program, word processing program, web browser, and camera.

The application 12, with support and compliance capabilities, may be a source program, executable program (object code), script, application, or any other entity having a set of instructions to be performed. When a source program, the program needs to be translated via a compiler, assembler, interpreter, or the like, which may or may not be included within the memory, so as to operate properly in connection with the operating system. Furthermore, the HWR system with support and compliance capabilities can be written as (a) an object oriented programming language, which has classes of data and methods; (b) a procedure programming language, which has routines, subroutines, and/or functions, for example but not limited to C, C++, Pascal, Basic, Fortran, Cobol, Perl, Java, Objective C, Swift, and Ada; or (c) functional programing languages for example but no limited to Hope, Rex, Common Lisp, Scheme, Clojure, Racket, Erlang, OCaml, Haskell, Prolog, and F#.

Strokes entered on or via the input surface 4 are processed by the processor 6 as digital ink. A user may enter a stroke with a finger or some instrument such as a pen or stylus suitable for use with the input surface. The user may also enter a stroke by making a gesture above the input surface 4 if technology that senses motions in the vicinity of the input surface 4 is being used, or with a peripheral device of the computing device DV, such as a mouse or joystick. A stroke is characterized by at least the stroke initiation location, the stroke termination location, and the path connecting the stroke initiation and termination locations. Because different users may naturally write the same object, e.g., a letter, a shape, a symbol, with slight variations, the HWR system accommodates a variety of ways in which each object may be entered whilst being recognized as the correct or intended object.

The present system and method allow handwriting to be input virtually anywhere on the input area 4 of the computing device DV and this input is rendered as digital ink in the input position on the display area 5. The input area 4 may be provided as an unconstrained canvas that allows users to create graphical objects (text objects or non-text objects as further detailed below) anywhere without worrying about sizing or alignment. However, an alignment structure in the form of a line pattern background may be provided for guidance of user input and the alignment of digital and typeset ink objects. In any case, as users may input handwriting that is not closely aligned to the line pattern or may desire to ignore the line pattern and write in an unconstrained manner, such as diagonally or haphazardly, the HWR system is able to recognize this freely positioned handwriting. This 'free' input may be rendered as digital ink at the input position.

Various types of input elements can be processed by the computing devices. More specifically, the computing device groups all the strokes into objects of one or more strokes. This grouping allows generating the strokes into coherent single objects, as the text objects (such as characters, words, lines or paragraphs) or the non-text objects (such as primitives and shapes, or drawings). Different strategies may be implemented to aggregate classification results for each stroke. The generation of objects may also be based on other predefined constraints such as stroke level constraints, spatial constraints, etc. to make it more comprehensible, robust and useful for subsequent recognition.

The present system and method further allow users to interact with the digital ink itself and provide meaningful guidance and results of that interaction. Interaction is assisted by the performance of segmentation of strokes in the recognition process and using information on this segmentation to allow management of an input or editing cursor that acts as a pointer for character level interactions and editing operations.

The HWR system includes stages (and corresponding modules) such as preprocessing, recognition and output. The preprocessing stage processes the digital ink to achieve greater accuracy and reducing processing time during the recognition stage. This preprocessing may include normalizing of the path connecting the stroke initiation and termination locations by applying size normalization and/or methods such as β-spline approximation to smooth the input. The preprocessed strokes are then passed to the recognition stage which processes the strokes to recognize the objects formed thereby. The recognized objects are then output to the display 5 as a digital ink or typeset ink versions of the handwritten input.

The recognition stage may include different processing elements or experts. Three expert systems, a segmentation expert system, a recognition expert system, and a language expert system, collaborate through dynamic programming to generate the output. An expert system is a computer system emulating the decision-making ability of a human expert. Expert systems are designed to solve complex problems by reasoning through bodies of knowledge, represented mainly as if-then rules rather than through conventional procedural programming.

Some aspects of these experts are described here below to facilitate understanding of the present invention. However, no further detail is provided to avoid unnecessarily obscuring the present disclosure. Details of implementing handwriting recognition can for instance be found in EP patent application N° 1 836 651 A1.

The segmentation expert defines the different ways to segment the input strokes into individual element hypotheses such as alphanumeric characters and mathematical operators, text characters, basic geometric shapes referred to as primitives (line segment, circle, ellipse, arc of circle, arc of ellipse, point or more complex shapes) or sub expression, in order to form expressions such as words, mathematical equations, or groups of shapes.

For example, the segmentation expert may form the element hypotheses by grouping consecutive strokes of the original input to obtain a segmentation graph where each node corresponds to at least one element hypothesis and where adjacency constraints between elements are handled by the node connections.

Alternatively, the segmentation expert may employ separate experts for different text or non-text input, aimed at recognizing different categories or types of objects, such as characters, drawings, shapes, equations, and music notation.

To this end, the segmentation expert may process the plurality of ink points into a plurality of segments each corresponding to a respective sub-stroke of the stroke represented by the original input. Each sub-stroke comprises a respective subset of the plurality of ink points representing the stroke.

The insight behind sub-stroke segmentation is to obtain a sequential representation that follows the path of the stroke. Each segment corresponds as such to a local description of the stroke. Compared to representing the stroke as a mere sequence of points, sub-stroke segmentation permits to maintain path information (i.e., the relationships between points within each segment) which results in a reduction in computation time.

Different sub-stroke segmentation techniques may be used according to embodiments. In an embodiment, sub-stroke segmentation based on temporal information is used, resulting in the plurality of segments having equal duration. In an embodiment, the same segment duration is used for all strokes. Further, the segment duration may be device independent.

As described in more details below, an aspect of the present invention involves using a computing device to display input elements in various sections of a display area, detect a user selection gesture which is performed on the computing device to define a selection area, and select each input elements contained (partially or totally) in the selection area defined by the user selection gesture. More particularly, this selection area is formed by a selection path defined by the user selection gesture. Further aspects of the present invention will be described hereafter.

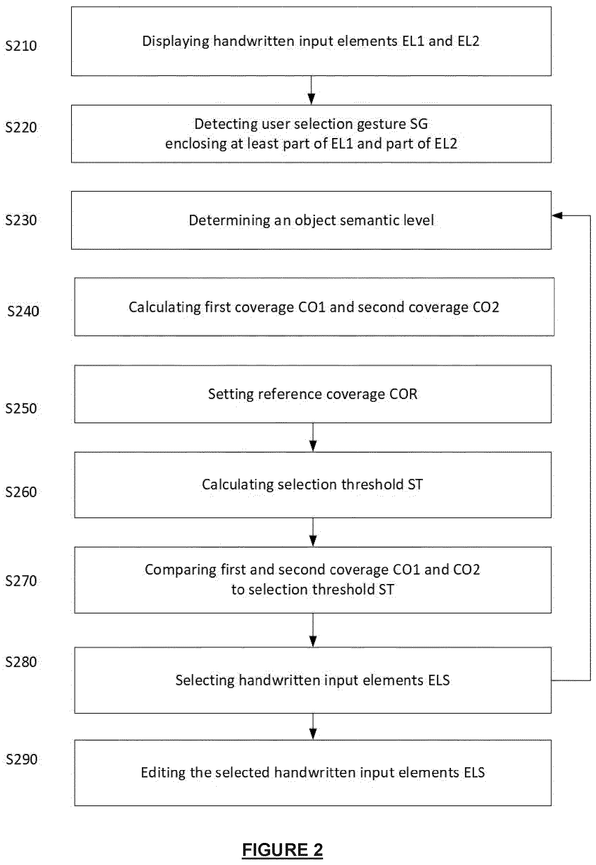

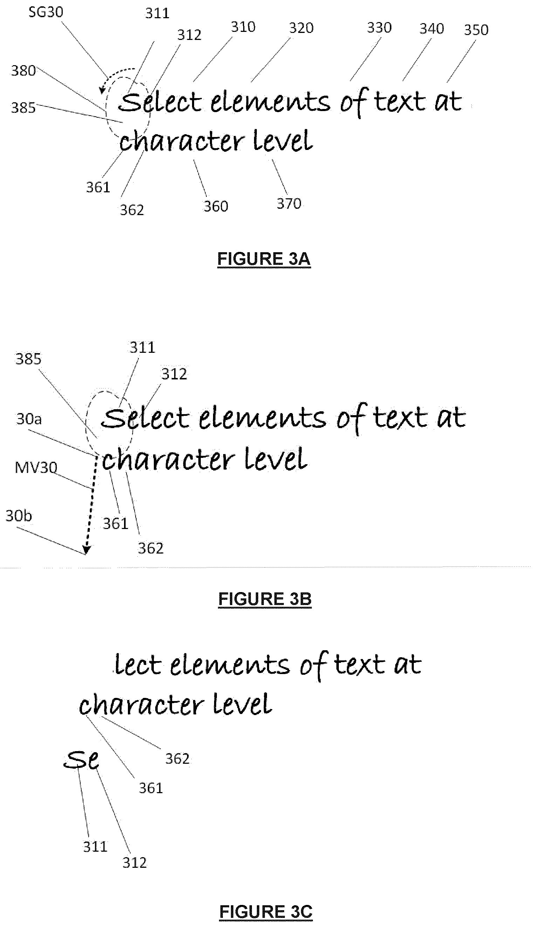

In accordance with a particular embodiment of the present invention, a method for editing the handwritten input elements of an electronic document implemented by the computing device DV is now described with reference to figure 2 and illustrated by means of examples represented in figures 3-6. More specifically, the computing device DV implements this method by executing the application 12 stored in the memory 7.

According to a particular embodiment, when running the applications 12 stored in the memory 7 (figure 1), for each step of the method of the present invention, the computing device may comprise a corresponding module configured to perform said step, namely: a gesture detection module 14, a semantic level selecting module 16, a selection module 18 composed of a coverage calculation module 182, a reference setting module 184, a threshold calculating module 186, a coverage comparison module 188, a coverage identifying module 190, and an editing module 20.

The examples are contemplated where hand-drawn (or handwritten) elements are input to the computing device DV and a user then wishes to select one or more of these elements, for instance to perform some edition on the selected elements. It is assumed in these examples that these elements are hand-drawn by a user on the computing device DV using the input interface 4. Alternatively, these hand-drawn graphical elements may be obtained, received or determined in any suitable manner by the computing device DV.

In a displaying step S210 (figure 2), the computing device DV displays a plurality of input elements or graphical objects in digital ink, in a display area 5 of the display device.

According to a particular embodiment, the gesture detection module 14 (figure 1) is configured to detect a selection gesture with the input surface 4 which defines a selection area or selection zone.

The computing device is configured to detect and display the handwritten input which is input using the input interface 4 in a free handwriting format (or free handwriting mode). By nature, no constraint of lines, size, orientation, margin or the like is imposed on a user in a free handwriting mode, such that various and complex forms of handwriting may be input, thereby rendering more difficult the implementation of editing functions by a computing device to manipulate text handwriting (e.g. move, rescale, correct, insert line breaks in a text flow). This free handwriting format affords complete freedom to the user during handwriting input, which is sometimes desirable for instance to take quick and miscellaneous notes or make mixed input of text and non-text. In the following examples, it is further assumed that the text handwriting is input in the free handwriting mode (or format) as described above.

The display of the computing device is configured to display, in a display area (or input area), text handwriting formed by a plurality of strokes (or input strokes) of digital ink.

As shown in figures 3, 4, 5 and 6, the computing device DV may display for instance: at least two elements EL1 and EL2 of text or non-text entered using a free handwriting mode.

As a general rule, the way the hand-drawn input displayed in the display area 5 is defined into elements depends on each use case. The handwritten input elements are recognized as objects by the HWR system as detailed above. The input elements may represent distinct text objects such as characters, words, text lines or paragraph although defining other graphical objects is possible such as shape objects and primitives or drawing objects and strokes.

In a detecting step S220 (figure 2), the computing device DV detects a selection path of a user selection gesture SG in the display area 5 performed with the input surface 4 to define a selection area (also called "lasso enclosure").

In the present example, the user selection gesture SG is an interaction of a user's finger or other body part (or any input tool) with the input surface 4 which causes generation of a stroke of digital ink on the display device along the selection path. Display of this digital ink provides visual feedback to assist the user while he/she is drawing a selection path in the display area.

In one example, the selection gesture SG may be a free-selection gesture (or lasso gesture) on the input surface°4 which forms roughly a closed (or nearly closed) loop, such as a roughly circular or oval form or the like, or at least a geometric shape which allows the computing device to deduce therefrom the selection area which may contain one or more input elements. In another example, the selection gesture SG is a shape-based gesture, for example a rectangle, input on the input surface 4. In response to the detection of this selection gesture, a visual indication may be displayed on the display, thereby rendering the user with visual feedback of the detection.

The way the forthcoming input element selection will be performed is a function of the enclosure extent of the handwritten elements. As discussed further below, selection of one or more input elements may be performed in accordance with the determination of an object semantic level, the calculation of element coverages CO and the determination of a selection threshold to deduce therefrom whether the input element is included in the selection.

The semantic levels refer to hierarchical ranks of the recognized objects, which depend on types or categories of the objects recognized from an input element. As explained above, the recognition expert of the HWR system may recognize input elements of different types including text objects and non-text objects, such as shapes or drawings, wherein each type or category may comprise different semantic levels or hierarchical ranks of recognition. A same input element may be considered at different semantic levels and the recognized objects arising from the recognition of the input element may by manipulated according to different semantic levels, defining objects and sub-objects composing the objects.

For example, an input element recognized as a text element may be considered according to a most basic level, for example a text sub-stroke or a most complex level, for example a paragraph. For text elements, intermediate levels may be considered in between such as characters, words, and lines, wherein an object may be composed of at least one sub-object. For example, a word object is composed of at least one character object.

In some implementations, objects identical at different semantic levels (for example, the character 'a' and the indefinite article "a" in the English language may be considered at character level and at word level) may be considered as elements belonging to the lower semantic level. In other implementations, objects identical at different semantic levels (for example, the single word "yes" on one line may be considered at word level and at line level) may be considered as elements belonging to the higher semantic level.

In another example, the input element recognized as a non-text element, such as a shape, may be considered according to the most basic level of a shape, referred to as a shape sub-stroke, or the most complex level of a shape, for example a container or a diagram. For non-text elements, intermediate levels may be considered in between such as primitives and shapes, wherein an object may be composed of at least one sub-object. For example, a shape object is composed of at least one primitive object.

In another example, the object recognized as a non-text element, such as a drawing, may be considered according to the most basic level of a drawing, being an ink range (defined as a set of ink points of a stroke), or the most complex level of a drawing, being a doodle, wherein a doodle is composed of at least one stroke.

In a semantic level determination step S230 (figure 2), the computing device DV is configured to determine the object semantic level of the selection of the handwritten input elements.

In one embodiment, the finally determined object semantic level is set as the most complex semantic level leading to at least one object of the considered semantic level enclosed with more than a predefined percentage, e.g. 50%, in the selection area.

For example, for text elements, the semantic level may be the character level when at least one enclosed character is more than a predefined percentage, e.g. 50%, enclosed in the selection area. The text semantic level may be the word level when at least one enclosed word is more than a predefined percentage, e.g. 50%, enclosed in the selection area. The text semantic level may be the line level when at least one enclosed line is more than 50% enclosed in the selection area. The text semantic level may be the paragraph level when at least one enclosed paragraph is more than a predefined percentage, e.g. 50%, enclosed in the selection area.

For non-text elements, the elements may be recognized as primitives or containers, and determination of the processed shape semantic level may follow similar determination rules. The elements may be recognized as drawings and the determination of the processed drawing semantic level may be set according to the at least 50% enclosed element determination rules.

In another example, the selection area may enclose a plurality of input elements of different types or categories. In a mix of text and non-text input element selection, a match between the object semantic levels of a text element and a non-text element may be defined. For example, when the object semantic level is set to the character level according to the above-described method, the selection of the non-text element partially enclosed in the same selection area may be processed at the shape level. The text and non-text semantic levels may be matched between text, shape and drawing categories, such that a text sub-stroke, an ink range and a shape sub-stroke may be equivalent and considered at a same level, a character, a drawing stroke and a shape may be equivalent and considered at a same level, and a paragraph, a doodle and a container may be equivalent and considered at a same level.

Alternatively, in a mix of text and non-text input element selection, selected input element of different categories may be considered independently, and the following steps of the method may be applied to only one category of selected input elements.

In another embodiment, the object semantic level of the selection is determined through a recursive process starting from the most basic object semantic level to a next semantic level. Therefore, the following steps S240, S250, S260, S270 and S280 may also be repeated through successive iteration of the recursive process until a final semantic level is reached leading to the selection of the considered objects recognized from the handwritten input elements according to a finally determined object semantic level.

The computing device DV thus determines, based on the following steps, which one of the enclosed input elements is included in a selection of at least one input element in the display area 5. The following steps are configured to determine the selected input elements from the input elements at least partially enclosed in the selection area.

In one embodiment, for each object semantic level processed, the partially enclosed input element may be part of the selection if a relative proportion of the path of the input element enclosed within the selection area reaches a predetermined relative threshold, as detailed below.

In another embodiment, for each object semantic level processed, a partially enclosed input element may be part of the selection if an absolute proportion of the path, or the range of ink points, of the input element enclosed within the selection area reaches a predetermined absolute threshold.

Yet, in another embodiment, for each object semantic level processed, the partially enclosed object may be part of the selection if it reaches a threshold number of sub-objects selected at the previous semantic level processed.

In a calculating step S240 (figure 2), the computing device DV calculates coverages CO1 and CO2 of the enclosed part of the handwritten input elements.

In a particular embodiment, the coverage calculation module 182 is configured to calculate an element coverage of each input element at least partially included in the selection area. An algorithm may be executed by the computing device DV, for each input element partially enclosed in the selection area, to determine the proportion (or percentage) of the input element within (or conversely outside) the selection area.

Firstly, the computing device DV determines in a full-length determination step S242, the full lengths FL1 and FL2 of the respective enclosed handwritten input element EL1 and EL2, wherein the enclosed handwritten input element may be considered at a different semantic level according to the semantic level determination step.

In one example, the full lengths FL1 and FL2 may be defined as a sum of path-length of the distances between successive connected ink points belonging to the respective input elements EL1 and EL2.

In another example, the full lengths FL1 and FL2 may be defined as a sum of instances of the number of sub-objects of the respective input elements EL1 and EL2 and according to the considered semantic level.

Then, the computing device DV determines, in a partial length determination step S244, the partial lengths PL1 and PL2 of the respective enclosed part of the handwritten input elements.

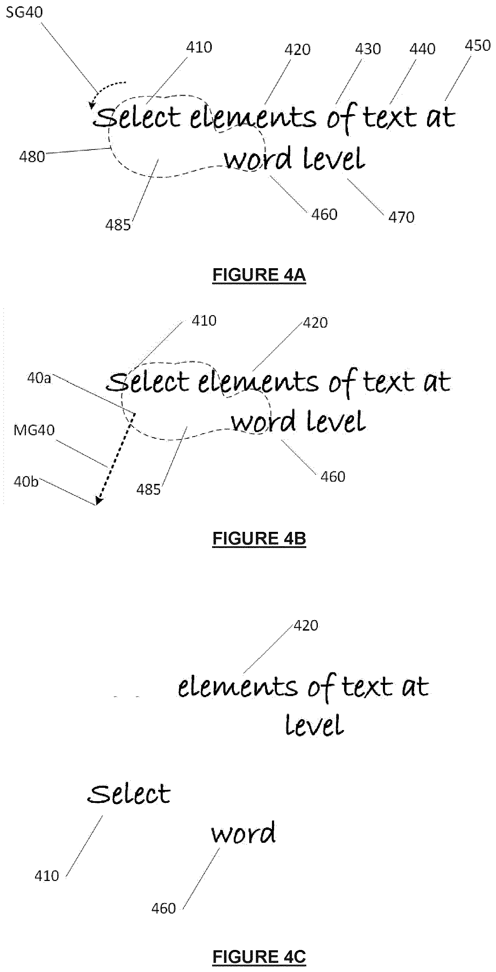

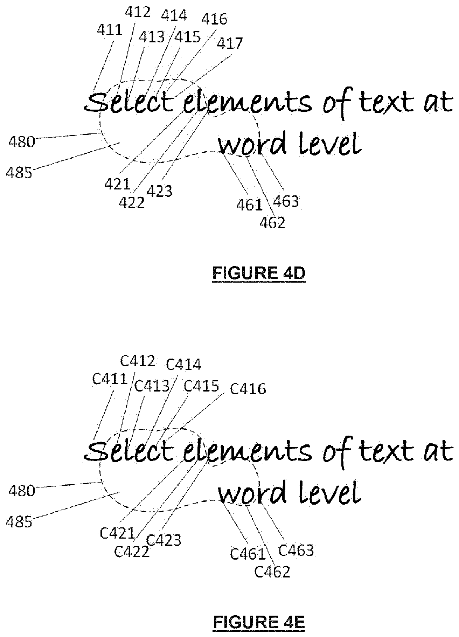

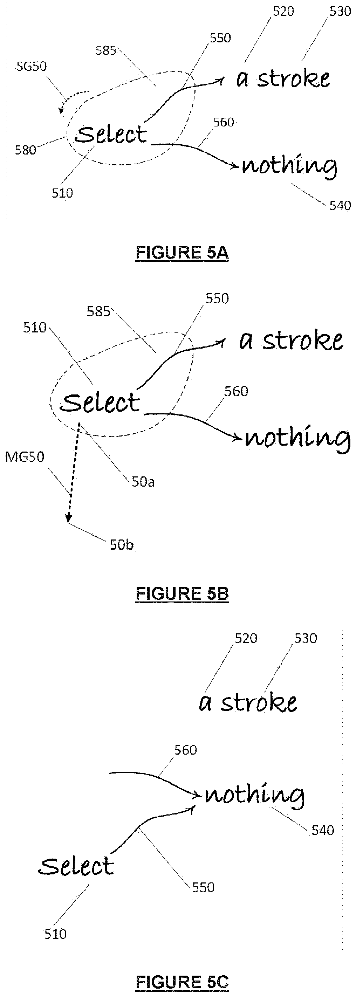

When the selection path intersects with the respective handwritten input elements, as for example the character 312 in the figures 3, the words 410, 420 and 460 of figures 4 and the shapes 550 and 560 of figures 5, the calculation of the respective coverage of the enclosed part of the handwritten elements includes the determination of a respective partial length of the enclosed part of the handwritten element corresponding to the path of the handwritten element enclosed within the selection area.

In one example, the partial lengths PL1 and PL2 may be defined as the sum of the distances between successive connected ink points that are both belonging to the respective input elements, EL1 and EL2, and to the selection area.

In another example, the partial lengths PL1 and PL2 may be defined as the sum of the distances between successive connected ink points that belong to the sub-objects that would be selected at the previous semantic level.

Yet, in another example, the partial lengths PL1 and PL2 may be defined as the sum of instances of the number of sub-objects that would be selected at the previous semantic level.

When the selection area encloses totally the respective handwritten input element, as for example the character 311 of figures 3A to 3C or the word 510 of figures 5A to 5C, the partial length may be equal to the full length.

Finally, the calculating step S260 is performed by calculating the coverages CO1 and CO2 of the enclosed part of the handwritten input element EL1 and EL2 by dividing the respective partial lengths PL1 and PL2 by the respective full lengths FL1 and FL2 of the enclosed handwritten elements EL1 and EL2, respectively.

In a reference setting step S250, the computing device is setting a reference coverage COR by considering the highest coverage between the calculated coverages CO1 and CO2 of the enclosed part of the handwritten input elements.

In a threshold determination step S260, the computing device is determining a selection threshold.

In one embodiment, the selection threshold is a relative ratio of the enclosed element, for example the selection threshold is determined according to 50% of the reference coverage.

In the examples discussed herein, the reference coverage is determined by considering the coverages of all recognized enclosed objects of the input element, by setting the reference coverage as the highest of the coverages and by calculating the selection threshold ST as, e.g., 50% of the reference coverage COR.

In another embodiment, the selection threshold is an absolute ratio of the enclosed element, for example the selection threshold may be pre-determined or settable via the UI of the application 12. For example, the selection threshold may be set at 50% of the enclosed element.

The selection threshold determination may be set differently at the considered semantic level of the recursive process of selection of the input elements. For example, when the semantic level of the selection is considered at the most basic object level such as the sub-stroke level, the selection threshold is set as the relative ratio of the enclosed element, and when the semantic level of the selection is considered at more complex levels, such as character or shape level, the selection threshold is set as the absolute ratio of the enclosed element.

In a comparing step S270, the computing device is comparing each of the coverages CO1 and CO2 to the selection threshold.

In a selecting step S280, the computing device is selecting either one or both of the handwritten input elements EL1 and EL2 when the respective calculated coverages CO1 and CO2 are higher or equal to the selection threshold.

The computing device may perform an editing operation during an editing step S290. In a particular embodiment, the editing module 20 is configured to edit the selected handwritten input elements. Such an editing operation may be triggered by a user in response to any suitable user command (e.g. a user gesture on the input surface 4), or by the computing device DV itself upon detection of a predetermined event.

In one embodiment, the editing operation may comprise other formatting and styling operations such as line and text color, line thickness, container shading, text highlighting, animation, decoration, etc.

In another embodiment, the computing device may detect a moving gesture or dragging gesture onto the input surface 4 intended at displacing the selected input elements from a selection initial location to a final location. A location of the selected input elements is defined according to a reference point and coordinates (x, y) of the reference point. For example, in figures 3, 4 and 5, the editing operation consists in moving gestures MV30, MV40 and MV50 respectively wherein the selected elements are moved from initial points to final points.

The moving gesture defines the displacement. The editing module 20 is configured to detect a direction and a distance of the displacement between a pointer initial position and a pointer final position detected through the moving gesture made by the user over the display.

Figures 3A, 3B and 3C show an example of editing handwritten input elements according to a particular embodiment of the invention.

Figure 3A shows, on the display area 5, handwritten input elements of an electronic document, as two lines of handwritten text including a first line of five words 310, 320, 330, 340 and 350 ("select elements of text at") and a second line of two words 360, 370 ("character level"). Additionally, Figure 3A shows a selection path 380 resulting from a selection gesture SG30, detected on the input interface°4 by the computing device. The selection path 380 defines a selection area 385 enclosing a first character 's' 311 and part of a second character 'e' 312 of the first word 310 and, part of a third character 'c' 361 and part of a fourth character 'h' of the sixth word 360. A visual indication of the selection path 380 is displayed.

Figure 3B shows, on the display area 5, the handwritten input elements of figure 3A, wherein the selection area 385 encloses the first character 311, part of the second character 312, part of the third character 361 and part of the fourth character 362. Additionally, the figure 3B shows a moving gesture MV30 defining a displacement move characterized by a displacement direction and a displacement distance illustrated by a dash arrow between an initial point 30a and a final point 30b.

The detection of the user selection gesture SG30 and definition of the selection area 385 allows a selection of handwritten input elements according to different embodiments of the present invention.

The selection of enclosed handwritten input elements is determined by a determination of an object semantic level of the selection of the input elements.

In the example of figures 3, the object semantic level of the selection is considered at character level and the enclosed handwritten objects are the characters of the input elements recognized by the handwriting recognition system. The object semantic level of the selection is determined by considering that the most complex object enclosed by at least 50% coverage is the character 311.

The selection of enclosed handwritten characters is determined by a calculation of coverages of the enclosed part of the characters.

Essentially, first, second, third and fourth coverages are calculated for the enclosed parts of the first, second, third and fourth characters respectively. The coverages are calculated by first, determining full lengths of the first, second, third and fourth characters. A coverage of an enclosed part of a handwritten input element is calculated by determining a full length of the handwritten element enclosed with the detected selection area. A full length of a character is defined in pixels by the digital ink path of a sub-stroke segmented into individual element. As further explained above, the handwriting recognition system processes the digital ink by segmenting the corresponding handwriting input strokes into individual element hypotheses. The plurality of ink points of a plurality of segments corresponds to a respective sub-stroke of the stroke represented by the original input. Each sub-stroke comprises a respective subset of the plurality of ink points representing the stroke.

When the enclosed handwritten element is totally enclosed within the selection area, the partial length of the enclosed part of the handwritten element is also the full length of the element.

In one example, the figures 3A and 3B, the first character 311 is totally enclosed within the selection area, therefore the first partial length of the enclosed part of the first character is equal to the first full length of the character. A first coverage of the enclosed part of the character 311 is 100%.

When the enclosed handwritten element intersects with a path of the selection gesture, a partial length of the enclosed part the handwritten element is determined.

In other examples, on the figures 3A and 3B, the selection path 380 is intersecting with the second, third and fourth characters 312, 361 and 362 at, at least an intersection point. Therefore, partial lengths of the enclosed parts of the respective characters are determined based on their respective paths enclosed within the selection area 385. For example, the selection path 380 intersects the second character 'e' 312, at three intersection points, the third character 'c' 361 at two intersections points and the fourth character 'h' 362, at one intersection point, therefore the second, third, fourth partial lengths of the 'e' 312, the 'c' 361 and the 'h' 362 are the paths of each sub-strokes included into the selection area 385. In the example of figures 3A-3C, the second, third and fourth coverages of the enclosed part of the 'e', the 'c' and the 'h' are respectively 80%, 5% and 20%.

The selection of the enclosed handwritten input element requires the setting of a reference coverage, such as the highest coverage of calculated coverages, and the calculation of a selection threshold based on the reference coverage. For the example of figures 3A and 3B, the highest coverage of the first, second, third and fourth coverages is the first coverage which is equal to 100%. The selection threshold may be fixed to 50% of the highest coverage, therefore the selection threshold is 50%. The calculated coverages of the enclosed part of the second, third and fourth characters are compared to the selection threshold. When the calculated coverages are equal or higher than the selection threshold, the respective characters are selected and included as selected handwritten elements. For example, on the figures 3A and 3B, the first and second coverages are respectively equal or higher than the selection threshold, therefore the first and the second characters are included as selected input elements. The third and the fourth coverages are lower than the selection threshold, therefore the third and fourth characters are excluded from the selection. The first and second characters are, thus, selected elements.

In the example of figures 3A-3C, the most complex object enclosed by at least 50% coverage is the character 311. The word 310 is enclosed by less than 50% coverage. Therefore, the finally determined object semantic level of the selection is the character level. That is, the text elements are processed at character level and the potential selected handwritten objects are the characters of the input elements recognized by the handwriting recognition system. The word level selection steps, corresponding to the next semantic level, are not performed and the word 310 is not considered in the selection.

The selected elements are available to receive an editing operation such as a formatting edition, for example modifying the font or highlighting the selected text elements. The editing operation may be a move displacement of the selected input elements. For example, figure 3B shows the moving gesture MV30 defining a displacement move characterized by a displacement direction and a displacement distance illustrated by a dash arrow between an initial point 30a and a final point 30b. Therefore, the selected characters 311 and 312 will undergo a move according to the translation move illustrated between the initial and the final point, as further shown in figure 3C.

Figure 3C shows, on the display area 5, the handwritten input elements of figure 3A and 3B, wherein the first 311 and the second 312 characters have been moved following the selection gesture SG30 of figure 3A and the moving gesture MV30 of figure 3B. Despite the intersection of the selection gesture path 380 of figure 3A with the path of the third 361 and the fourth 362 characters, these input elements remain at the initial positions since their respective coverages are not fulfilling the selection criteria. Therefore, the user controls the selection process by interacting directly with the input area and by drawing the selection path around the handwritten input elements. Inadvertently enclosing part of neighboring input elements is not dismissing the whole selection gesture.

Figures 4A, 4B and 4C show an example of editing handwritten input elements according to a particular embodiment of the invention.

Figure 4A shows, on the display area 5, handwritten input elements of an electronic document, as two lines of handwritten text including a first line of five words 410, 420, 430, 440 and 450 ("select elements of text at") and a second line of two words 460, 470 ("word level"). Additionally, Figure 4A shows a selection path 480 resulting from a selection gesture SG40, detected on the input interface 4 by the computing device. The selection path 480 defines a selection area 485 enclosing a first word 410 and part of a second word 420 on the first line, and part of a third word 460 on the second line. A visual indication of the selection path 480 is displayed.

Figure 4B shows, on the display area 5, the handwritten input elements of figure 4A, wherein the selection area 485 encloses the first word 410, part of the second word 420, and part of the third word 460. Additionally, figure 4B shows a moving gesture MV40 defining a displacement move characterized by a displacement direction and a displacement distance illustrated by a dash arrow between an initial point 40a and a final point 40b.

The detection of the user selection gesture SG40 and definition of the selection area 485 allows a selection of handwritten input elements according to different embodiments of the present invention.

The selection of enclosed handwritten input elements is determined by a determination of an object semantic level of the selection of the input elements.

In the example of Figures 4A-4C, the object semantic level of the selection is considered at word level and the enclosed handwritten objects are the words of the input elements recognized by the handwriting recognition system. The object semantic level of the selection is determined by considering that the most complex object enclosed by at least 50% coverage is the word 410.

In the example of Figure 4, the enclosed handwritten input elements are words recognized by the handwriting recognition system.

The selection of enclosed handwritten words is determined by a calculation of coverages of the enclosed part of the words.

First, second, and third coverages are calculated for the enclosed parts of the first, second, and third words respectively. The coverages are calculated by first, determining full lengths of the first, second, and third words.

When the enclosed handwritten element intersects with a path of the selection gesture, a partial length of the enclosed part the handwritten element is determined.

In the example of figures 4A and 4B, the selection path 480 is intersecting with the first, second and third words 410, 420 and 460. Therefore, partial lengths of the enclosed parts of the respective words are determined based on their respective paths enclosed within the selection area 485. The first, second and third coverages of the enclosed part of first, second and third words are respectively 80%, 15% and 60%.

The selection of the enclosed handwritten input element requires the setting of a reference coverage, such as the highest coverage of calculated coverages, and the calculation of a selection threshold based on the reference coverage. For the example of figures 4A and 4B, the highest coverage of the first, second, and third coverages is the first coverage of 80%. The selection threshold is fixed to 50% of the highest coverage, therefore the selection threshold is 40%. The calculated coverages of the enclosed part of the second and third words are compared to the selection threshold. When the calculated coverages are equal or higher than the selection threshold, the respective words are selected and included as selected handwritten elements. For example, for the figures 4A and 4B, the first and third coverages are respectively equal or higher than the selection threshold, therefore the first and the third words are included as selected input elements. The second coverage is lower than the selection threshold, therefore the second word is excluded from the selection. The first and third words are selected elements.

In the example of figures 4, the most complex object enclosed by at least 50% coverage is the word 410. The first line is enclosed by less than 50% coverage. Therefore, the finally determined object semantic level of the selection is the word level. That is, the text input elements are processed at word level and the potential selected handwritten objects are the words of the input elements recognized by the handwriting recognition system. The line level selection steps, corresponding to the next semantic level, are not performed and the first line is not considered in the selection.

The selected elements are available to receive an editing operation such as a formatting edition, for example modifying the font or highlighting the selected text elements. The editing operation may be a move displacement of the selected input elements. For example, figure 4B shows the moving gesture MV40 defining a displacement move characterized by a displacement direction and a displacement distance illustrated by a dash arrow between an initial point 40a and a final point 40b. Therefore, the selected words 410 and 460 will undergo a move according to the translation move illustrated between the initial and the final point, as further shown in figure 4C.

Figure 4C shows, on the display area 5, the handwritten input elements of figure 4A and 4B, wherein the first 410 and the second 460 words have been moved following the selection gesture SG40 of figure 4A and the moving gesture MV40 of figure 4B. Despite the intersection of the selection gesture path 480 of figure 4A with the path of the second word 420, these input elements remain at the initial position since the coverage is not fulfilling the selection criteria. Therefore, the user controls the selection process by interacting directly with the input area and by drawing the selection path around the handwritten input elements. Inadvertently enclosing part of neighboring input elements is not dismissing the whole selection gesture.

Figures 5A, 5B and 5C show an example of editing handwritten input elements according to a particular embodiment of the invention.

Figure 5A shows, on the display area 5, handwritten input elements of an electronic document, presented as a diagram also called a mind map of handwritten mixture of text and non-text elements including a first line of text element as one word 510 ("select"), a second line of two text elements as two words 520 and 530 ("a stroke"), a third line of text element as one word 540 ("nothing") and a first 550 and a second 560 handwritten non-text elements as two arrows visually connecting the first line with the second and the third lines respectively to display the content as a mind map representation. Each of the characters, words or arrows are recognized as objects. Additionally, Figure 5A shows a selection path 580 resulting from a selection gesture SG50, detected on the input interface 4 by the computing device. The selection path 580 defines a selection area 585 enclosing the first word 510 and part of the first and second arrows 550 and 560. A visual indication of the selection path 580 is displayed.

Figure 5B shows, on the display area 5, the handwritten input elements of figure 5A, wherein the selection area 585 encloses the first word 510, part of the first and the second arrows 550 and 560. Additionally, figure 5B shows a moving gesture MV50 defining a displacement move characterized by a displacement direction and a displacement distance illustrated by a dash arrow between an initial point 50a and a final point 50b.

The detection of the user selection gesture SG50 and definition of the selection area 585 allows a selection of handwritten input elements according to different embodiments of the present invention.

The selection of enclosed handwritten input elements is determined by a determination of an object semantic level of the selection of the input elements.

In the example of Figure 5, the enclosed handwritten input elements are a mix of text and non-text elements recognized by the handwriting recognition system. The text elements are characters or words and the non-text elements are primitives or shapes.

Therefore, a match between the object semantic level of the text elements and the shape elements may be defined. The word level and the shape level may be considered equivalent levels although they belong to different categories. The object semantic level of the selection may be considered at word/shape level and the enclosed handwritten objects are then the words and shapes of the input elements recognized by the handwriting recognition system. The object semantic level of the selection may be determined by considering that the most complex object enclosed by at least 50% coverage is the word 510.

The selection of enclosed handwritten input elements is determined by a calculation of coverages of the respective enclosed part of the input elements.

First, second, and third coverages (CO51, CO52 and CO53) are calculated for the enclosed parts of the first elements as the first word 510, the second element as the first arrow 550, and the third element as the second arrow 560 respectively. The coverages are calculated by first, determining full lengths of the first, second, and third elements.

When the enclosed handwritten element is totally enclosed within the selection area, the partial length of the enclosed part of the handwritten element is also the full length of the element.

In one example of the figures 5A and 5B, the first element 510 is totally enclosed within the selection area, therefore the first partial length of the enclosed part of the first element is equal to the first full length of the word. The first coverage CO51 of the enclosed part of the word 510 is 100%.

When the enclosed handwritten element intersects with a path of the selection gesture, a partial length of the enclosed part the handwritten element is determined.

In other examples of the figures 5A and 5B, the selection path 580 is intersecting with the first 550 and the second 560 arrows at, at least an intersection point. Therefore, partial lengths of the enclosed parts of the respective arrows are determined based on their respective paths enclosed within the selection area 585. The second CO52 and third CO53 coverages of the enclosed part of first and second arrows are respectively 80% and 10%.

The selection of the enclosed handwritten input element requires the setting of a reference coverage, equal to the highest coverage of calculated coverages, and the calculation of a selection threshold based on the reference coverage. For the example of figures 5A and 5B, the highest coverage of the first, second, and third coverages is the first coverage CO51 of 100%. The selection threshold is fixed to 50% of the highest coverage, therefore the selection threshold is 50%. The calculated coverages CO51, CO52 and CO53 of the enclosed part of the input elements are compared to the selection threshold. When the calculated coverages are equal or higher than the selection threshold, the respective elements are selected and included as selected handwritten elements. For example, in figures 5A and 5B, the first and second coverages are respectively equal or higher than the selection threshold, therefore the first 510 and the second 550 elements are included as selected input elements. The third coverage is lower than the selection threshold, therefore the third element 560 is excluded from the selection. The first word 510 and the first arrow 550 are selected elements.

In the example of figures 5, the most complex object enclosed by at least 50% coverage is the word 510. The diagram is enclosed by less than 50% coverage.

Therefore, the finally determined object semantic level of the selection is the word/shape level. That is the mixed text/non-text input elements are processed at word/shape level and the potential selected handwritten objects are the words or shapes of the input elements recognized by the handwriting recognition system. The diagram level selection steps, corresponding to the next semantic level, are not performed and the whole diagram of figures 5 is not considered in the selection.

The selected elements are available to receive an editing operation such as a formatting edition, for example modifying the styles. The editing operation may be a move displacement of the selected input elements. For example, figure 5B shows the moving gesture MV50 defining a displacement move characterized by a displacement direction and a displacement distance illustrated by a dash arrow between an initial point 50a and a final point 50b. Therefore, the selected elements 510 and 550 will undergo a move according to the translation move illustrated between the initial and the final point, as further shown in figure 5C.

Figure 5C shows, on the display area 5, the handwritten input elements of figure 5A and 5B, wherein the first word 510 and the first arrow 550 have been moved following the selection gesture SG50 of figure 5A and the moving gesture MV50 of figure 5B. Despite the intersection of the selection gesture path 580 of figure 5A with the path of the second arrow 560, this input element remains at the initial position since the coverage CO53 is not fulfilling the selection criteria. Therefore, the user controls the selection process by interacting directly with the input area and by drawing the selection path around the handwritten input elements. Inadvertently enclosing part of neighboring input elements is not dismissing the whole selection gesture.

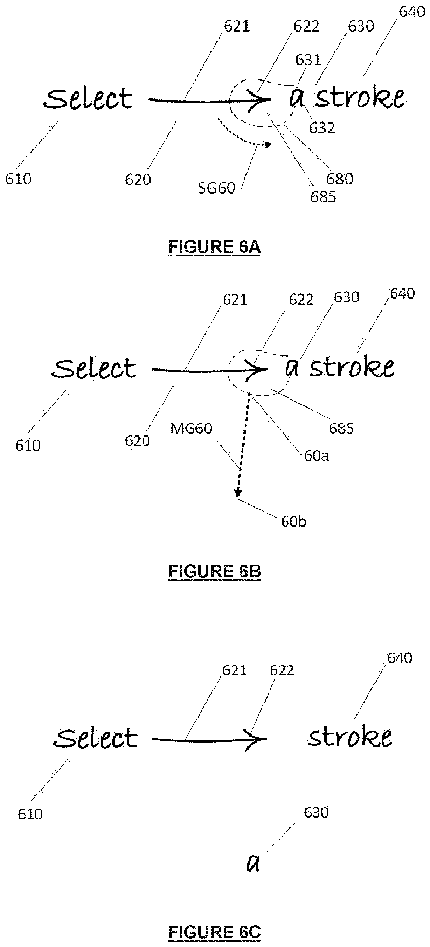

Figures 6A, 6B and 6C show an example of editing handwritten input elements according to a particular embodiment of the invention.

Figure 6A shows, on the display area 5, handwritten input elements of an electronic document, as a mixture of text and non-text elements including a first element of text as a word 610 ("select"), a second element of non-text as a shape or arrow 620 including a first stroke 621 as a shaft of the arrow, also referred to as a first primitive, and a second stroke 622 as a head of the arrow, also referred to as a second primitive, and a third element of text as two words 630 and 640 ("a stroke"). Each of the characters, words, primitives or shapes are recognized as objects. Additionally, figure 6A shows a selection path 680 resulting from a selection gesture SG60, detected on the input interface 4 by the computing device. The selection path 680 defines a selection area 685 enclosing part of the first stroke of the arrow 621, the second stroke 622 and part of the third element of text 630. A visual indication of the selection path 680 is displayed.

Figure 6B shows, on the display area 5, the handwritten input elements of figure 6A, wherein the selection area 685 encloses part of the first stroke of the arrow 621, the second stroke 622 and part of the third element of text 630. Additionally, figure 6B shows a moving gesture MV60 defining a displacement move characterized by a displacement direction and a displacement distance illustrated by a dash arrow between an initial point 60a and a final point 60b.

The detection of the user selection gesture SG60 and definition of the selection area 685 allows a selection of handwritten input elements according to different embodiments of the present invention.

The selection of enclosed handwritten input elements is determined by a determination of an object semantic level of the selection of the input elements.

In the example of Figure 6, the enclosed handwritten input elements are a mix of text and non-text recognized by the handwriting recognition system. The text elements may be sub-strokes or characters and the non-text elements may be primitives or shapes.

Therefore, a match between the object semantic level of the text element and the shape element may be defined. The character level and the shape level may be considered equivalent levels although they belong to different categories. The object semantic level of the selection may be considered at character/shape level and the enclosed handwritten objects are then the characters and shapes of the input elements recognized by the handwriting recognition system. The object semantic level of the selection is determined by considering that the most complex object enclosed by at least 50% coverage is the character 630.

The selection of enclosed handwritten characters and shapes is determined by a calculation of coverages of the enclosed part of the characters and shapes.

First and second coverages are calculated for the enclosed parts of the first shape 620, and the second character 630 respectively. The coverages are calculated by first, determining full lengths of the first and second elements.

When the enclosed handwritten element intersects with a path of the selection gesture, a partial length of the enclosed part the handwritten element is determined.

In the examples of the figures 6A and 6B, the selection path 680 is intersecting with the first shape and the second character at, at least an intersection point. Therefore, partial lengths of the enclosed parts of the respective shape and character are determined based on their respective paths enclosed within the selection area 685. The first and second coverages of the enclosed part of input elements are respectively 30% and 80%.

The selection of the enclosed handwritten input element requires the setting of a reference coverage, such as the highest coverage of calculated coverages, and the calculation of a selection threshold based on the reference coverage. For the example of figures 6A and 6B, the highest coverage of the first and second coverages is the second coverage of 80%. The selection threshold is fixed to 50% of the highest coverage, therefore the selection threshold is 40%. The calculated coverages of the enclosed part of the input elements are compared to the selection threshold. When the calculated coverages are equal or higher than the selection threshold, the respective elements are selected and included as selected handwritten elements. For example, in figures 6A and 6B, the second coverage is equal and higher than the selection threshold, therefore the second character 620 is included as selected input elements. The first coverage is lower than the selection threshold, therefore the first shape 620 is excluded from the selection.

In the example of figures 6A-6C, the most complex object enclosed by at least 50% coverage is the character 630. No other object of a more complex semantic level is enclosed. Therefore, the finally determined object semantic level of the selection is the word/shape level. That is the mixed text/non-text input elements are processed at character/shape level and the potential selected handwritten objects are the characters or shapes of the input elements recognized by the handwriting recognition system. No subsequent next semantic level selection steps are performed.

The selected elements are available to receive an editing operation such as a formatting edition, for example modifying the styles. The editing operation may be a move displacement of the selected input elements. For example, figure 6B shows the moving gesture MV60 defining a displacement move characterized by a displacement direction and a displacement distance illustrated by a dash arrow between an initial point 60a and a final point 60b. Therefore, the selected element 630 will undergo a move according to the translation move illustrated between the initial and the final point, as further shown in figure 6C.

Figure 6C shows, on the display area 5, the handwritten input elements of figure 6A and 6B, wherein the character 630 has been moved following the selection gesture SG60 of figure 6A and the moving gesture MV60 of figure 6B. Despite the intersection of the selection gesture path 680 of figure 6A with the path of the first shape 620, this input element remains at the initial position since the coverage is not fulfilling the selection criteria. Therefore, the user controls the selection process by interacting directly with the input area and by drawing the selection path around the handwritten input elements. Inadvertently enclosing part of neighboring input elements is not dismissing the whole selection gesture.

The selection of enclosed handwritten input elements is determined by a determination of an object semantic level of the selection of the input elements S240. The step of determining an object semantic level following the detection of a user selection gesture enclosing at least part of first and second elements S220 is further detailed below.

The selection of the handwritten input elements S280 involves a recursive process starting from addressing the lower semantic level of the object type included in the selection, calculating the coverages of the first and second elements, taking into account the selection threshold of the considered semantic level, selecting the appropriate input elements of the current semantic level and addressing the next semantic level of the object type by repeating the same steps. The final selection of the handwritten input elements corresponds to the selection of the input elements of the most complex semantic level possible of the enclosed input elements.

The selection threshold of the considered semantic level may be a relative threshold or an absolute threshold referred to as a relative or an absolute ratio above. A specific selection threshold is linked to a specific semantic level, a relative threshold is set at the lower semantic level whereas an absolute threshold may be set the higher semantic levels therefore the recursive process of selection may involve different selection thresholds depending on the semantic level being processed.

In one example of the figure 4A, at a first instance of the recursive process of the selection of the handwritten input elements S280, the enclosed handwritten input elements are fist considered at the lower semantic level of the object type which is the sub-stroke level. The figure 4D shows 13 sub-strokes at least partially enclosed in the selection area 485. For example, the word "select" 410 includes seven sub-strokes referred to as object 411 to 417 wherein the last letter 't' includes two sub-strokes 416 and 417 for forming the 't' letter.

Therefore, the computing device determines thirteen full lengths of each sub-strokes at least partially enclosed in the selection area 485, referred to as FL411 to FL417 for the word "select" 410, FL421 to FL423 for the word "elements" 420 and FL461 to FL463 for the word "word" 460, as the respective sums of path-length of the distances between successive connected ink points belonging to the respective input sub-strokes.

Then, the computing device determines thirteen partial lengths PL411 to PL417, PL421 to PL423 and PL461 to PL463 of the respective enclosed part of the handwritten input elements as the sum of the distances between successive connected ink points that are both belonging to the respective input elements and to the selection area.

At the first instance of the recursive process of the selection of the handwritten input elements S280, the calculated coverages of thirteen sub-strokes. The reference coverage COR is set as a relative threshold being defined as a ratio of the highest coverage of the considered elements, resulting in COR being 50%.

At the comparing step S270 the calculated coverages are compared with the selection threshold COR. At the selecting step S280, the sub-strokes 412, 413, 414, 415, 416, 417, 421, 422, 461, 462 and 463 are selected because their respective coverages are equal or higher than the selection threshold.

Following this first instance of the recursive process of selecting the handwritten input elements, the recursive process may involve a second instance by addressing the next semantic level of the object type included in the selection,

The selection area may include at least part enclosed input elements as objects of a next semantic level which triggers the occurrence of a next instance of the recursive process.

At a second instance of the recursive process of the selection of the handwritten input elements S280 of figure 4A, the enclosed handwritten input elements are then considered at the next semantic level of the object type which is the character level. The figure 4E shows 12 characters at least partially enclosed by the selection area. For example, the word "select" 410 includes six characters referred to as object C411 to C416.

Therefore, the computing device determines twelve full lengths of each characters at least partially enclosed in the selection area 485, as the respective sums of path-length of the distances between successive connected ink points belonging to the respective characters.

Then, the computing device determines twelve partial lengths of the respective enclosed part of the handwritten input characters as the sum of the distances between successive connected ink points that are both belonging to the respective input elements and to the selection area.

At the coverage calculating step S240, the computing device calculates the coverages of twelve sub-strokes. The reference coverage COR is set as a relative threshold being defined as a ratio of the highest coverage of the considered elements, resulting in COR being 50%.

At the comparing step S270 the calculated coverages are compared with the selection threshold COR. At the selecting step S280, the characters C412, C413, C414, C415, C416, C421, C422, C461, C462 and C463 are selected because their respective coverages are equal or higher than the selection threshold.

Following this second instance of the recursive process of selecting the handwritten input elements, the recursive process may involve a third instance by addressing the next semantic level of the object type included in the selection.

The selection area may include at least part enclosed input elements as objects of a next semantic level which triggers the occurrence of a next instance of the recursive process.

At a third instance of the recursive process of the selection of the handwritten input elements S280 of figure 4A, the enclosed handwritten input elements are then considered at the next semantic level of the object type which is the word level. The figure 4A shows three words 410, 420 and 460 at least partially enclosed by the selection area.

Therefore, the computing device determines three full lengths of each word at least partially enclosed in the selection area 485, as the respective sums of path-length of the distances between successive connected ink points belonging to the respective words.

Then, the computing device determines three partial lengths of the respective enclosed part of the handwritten input words as the sum of the distances between successive connected ink points that are both belonging to the respective input elements and to the selection area.

At the coverage calculating step S240, the computing device calculates the coverages of the three enclosed words. The reference coverage COR is set as a threshold being defined as a ratio of the considered elements, resulting in COR being 50%.

At the comparing step S270, the calculated coverages are compared with the selection threshold COR.

At the selecting step S280, the words 410 and 460 are selected because their respective coverages are equal or higher than the selection threshold.

Following this third instance of the recursive process of selecting the handwritten input elements, the recursive process may involve a fourth instance by addressing the next semantic level of the object type included in the selection.

The selection area may include at least part enclosed input elements as objects of a next semantic level which triggers the occurrence of a next instance of the recursive process.

At a fourth instance of the recursive process of the selection of the handwritten input elements S280 of figure 4A, the enclosed handwritten input elements may be considered at the next semantic level of the object type which is the line level. Therefore, the computing device is looking into determining the full lengths of the enclosed handwritten lines. Figure 4A shows two lines at least partially enclosed by the selection area.

At the coverage calculating step S240, the computing device calculates the coverages of the two lines. The reference coverage COR is set as a relative threshold being defined as a ratio of the considered elements, resulting in COR being 50%.

At the comparing step S270 the calculated coverages are compared with the selection threshold COR.

At the selecting step S280, the lines are not selected because their respective coverages are lower than the selection threshold. The selection of the input elements remains at the previous semantic level with the selection of the words 410 and 460.

At the editing step S290, the words 410 and 460 are moved according to the moving gesture MV40 of figure 4B.

In another example of the figure 6A, at a first instance of the recursive process of the selection of the handwritten input elements S280, the enclosed handwritten input elements are first considered at the lower semantic level of the object type which is the sub-stroke level. Therefore, the computing device determines the full lengths FL621, FL622 and FL631 of the respective enclosed handwritten sub-strokes 621 (the arrow shaft), 622 (the arrow head) and 631 (the 'a' boucle, whereas the 'a' cane 632 is a sub-stroke outside of the selection area 685) as the respective sums of path-length of the distances between successive connected ink points belonging to the respective input sub-strokes. Then, the computing device DV determines, the partial lengths PL621, PL622 and PL631 of the respective enclosed part of the handwritten input elements as the sum of the distances between successive connected ink points that are both belonging to the respective input elements and to the selection area. At the first instance of the recursive process of determining the semantic level of the selection example of figure 6A, the calculated coverages of sub-strokes 621, 622 and 631 are respectively CO621 30%, CO622 100% and CO631 95%. The reference coverage COR is set as a relative threshold being defined as a ratio of the highest coverage of the considered elements, for example the reference coverage is 50% of CO622 resulting in COR being 50%

At the comparing step S270 the calculated coverages (CO621, CO622 and CO631) are compared with the selection threshold COR. At the selecting step S280, the sub-strokes 621, 622 and 631 are selected because their respective coverages are equal or higher than the selection threshold.

Following this first instance of the recursive process of selecting the handwritten input elements, the recursive process may involve a second instance by addressing the next semantic level of the object type included in the selection,

The selection area may include at least part enclosed input elements as objects of a next semantic level which triggers the occurrence of a next instance of the recursive process.

At a second instance of the recursive process of the selection of the handwritten input elements S280 of figure 6A, the enclosed handwritten input elements may be considered at the next semantic level of the object type which is the character/shape level, considering that characters and shapes are equivalent semantic level of text and non-text object types.

Therefore, the computing device determines the full lengths FL620, FL630 of the respective enclosed handwritten arrow 620 and character 630 as the respective sums of path-length of the distances between successive connected ink points belonging to the respective object. Then, the computing device DV determines, the partial lengths PL620 and PL630 of the respective enclosed part of the handwritten input elements as the sum of the distances between successive connected ink points that are both belonging to the respective input elements and to the selection area. At the second instance of the recursive process of determining the semantic level of the selection example of figure 6A, the calculated coverages of objects 620 and 630 are respectively CO620 30% and CO630 80%. The reference coverage COR is set as an absolute threshold being defined as a ratio of the considered object, for example 50% of the full length of the considered object.

At the comparing step S270 the calculated coverages CO620 and CO630 are compared with the selection threshold COR. At the selecting step S280, the shape 620 is not selected because the coverage CO620 is lower than the selection threshold and the character 630 is selected because the coverage CO630 is higher than the selection threshold.

Following this second instance of the recursive process of selecting the handwritten input elements, the recursive process may involve a third instance by addressing the next semantic level of the object type included in the selection.

At a third instance of the recursive process of the selection of the handwritten input elements S280 of figure 6A, the enclosed handwritten input elements may be considered at the next semantic level of the object type which is the word/container level, considering that words and containers are the equivalent semantic level of text and non-text object types. Therefore, the computing device is looking into determining the full lengths of the enclosed handwritten words and containers which is set to null in both cases since no container or word may be enclosed in the selection area. The following steps of setting the reference coverage S250, calculating the selection threshold S260 and comparing the coverages to the selection threshold S270 are not processed and the selection of the handwritten input elements remains as the result of the second recursive instance of being the character 630.

At the editing step S290, the character 630 is moved according to the moving gesture MV60 of figure 6B.

## Claims

1. A computer implemented method for editing handwritten input elements of an electronic document, comprising:
- Displaying (S210), on a display area (5), a first handwritten input element (EL1) and a second handwritten input element (EL2);
- Detecting (S220), on an input interface (4), a user selection gesture (SG) defining a selection area (385, 485, 585, 685) enclosing at least part of the first handwritten input element and at least part of the second handwritten input element;
- selecting (S230) an object semantic level wherein the first and second handwritten input elements are recognized as at least one first object and at least one second object of the selected semantic level, said semantic level comprising a hierarchical rank of recognition for a type of said recognized objects ;
- selecting the recognized objects, wherein selecting comprises
o calculating (S240) a first coverage (CO1) of the enclosed part of the first object and a second coverage (CO2) of the enclosed part of the second object;
∘ setting (S250) a reference coverage (COR) to be equal to the highest coverage between the first and the second coverage;
o calculating (S260) a selection threshold (ST) as a function of the reference coverage;
o comparing (S270) the calculated first and second coverages to the selection threshold;
∘ identifying at least one calculated coverage being higher than the selection threshold; and
o selecting (S280) the objects with said calculated coverage; and
- editing (S290) the selected objects (ELS) of the electronic document.

2. The method of claim 1, wherein one or more of the recognized first and second objects are text objects including sub-strokes, characters, words, lines and/or paragraphs.

3. The method of claim 1 or 2, wherein one or more of the recognized first and second objects are non-text objects including primitives, shapes, containers and/or diagrams, wherein said primitives are basic geometric shapes.

4. The method of any one of claims 1 to 3, wherein calculating the first and second coverages, comprises:
- identifying full lengths of the recognized objects;
- identifying partial lengths of the enclosed part of the recognized objects; and
- calculating the coverages of the enclosed part of the recognized objects by dividing the partial lengths by the respective full lengths.

5. The method of claim 4, wherein the full length of the recognized object is identified by the path of the recognized object and the partial length is identified by the path of the recognized object enclosed within the selection area.

6. The method of any one of claims 1 to 5, wherein selecting the object semantic level comprises setting the object semantic level to an initial semantic level, wherein the selecting of the recognized objects is performed according to the initial semantic level.

7. The method of claim 6, further comprising selecting a next semantic level and performing the selecting of the recognized objects according to next semantic levels until no calculated coverage is identified.

8. The method of any one of claims 1 to 7, wherein the semantic levels belong to a set of semantic levels, the objects of the initial semantic level comprise sub-strokes or primitives, wherein said primitives are basic geometric shapes.

9. The method of claim 8, wherein the objects of the semantic level next to the initial semantic level comprise recognized characters or shapes composed of the recognized objects of the initial semantic level.

10. The method of claim 9, wherein the text objects of the subsequent next semantic levels comprise, in ascending order, recognized words, lines and paragraphs composed of the recognized objects of the prior semantic levels.

11. The method of claim 8 or 9, wherein the non-text objects of the subsequent next semantic levels comprise, in ascending order, recognized shapes, containers and diagrams composed of the recognized objects of the prior semantic levels.

12. A computing device (DV) for editing handwritten input elements of an electronic document, comprising:
- a display area (5) configured to display a first handwritten input element and a second handwritten input element;
- an input interface (4) configured to detect a user selection gesture defining a selection area enclosing at least part of the first handwritten input element and at least part of the second handwritten input element;
- a semantic level selecting module (16) configured to select a semantic level wherein the first and second handwritten input elements are recognized as at least one first object and at least one second object of the selected semantic level, said semantic level comprising a hierarchical rank of recognition for a type of said recognized objects;
- an object selecting module (18) configured to select the recognized objects, wherein the object selecting module comprises:
o a coverage calculating module (182) configured to calculate a first coverage of the enclosed part of the first object and a second coverage of the enclosed part of the second object;
o a reference setting module (184) configured to set a reference coverage to be equal to the highest coverage between the first and the second coverage;
o a threshold calculating module (186) configured to calculate a selection threshold as a function of the reference coverage;
o a comparison module (188) configured to compare the calculated first and second coverages to the selection threshold; and
∘ a coverage identifying module (190) configured to identify at least one calculated coverage being higher than the selection threshold; and
- an editing module (20) configured to edit the selected objects of the electronic document.

13. The computing device of claim 12, wherein the coverage calculating module comprises:
- a full length identifying module configured to identify full lengths of the recognized objects;
- a partial length identifying module configured to identify partial lengths of the enclosed part of the recognized objects; and
- a dividing module configured for calculating the coverages of the enclosed part of the recognized objects by dividing the partial lengths by the respective full lengths.

14. The computing device of claim 12 or 13, wherein the semantic level selecting module comprises a semantic level setting module configured to set the object semantic level to an initial semantic level.

15. The computing device of any one of claims 12 to 14, wherein the semantic level selecting module further comprises a next semantic level selecting module configured to perform the selecting of the recognized objects according to next semantic levels until no calculated coverage is identified.

## Patentansprüche

1. Computerimplementiertes Verfahren zum Bearbeiten handschriftlicher Eingabeelemente eines elektronischen Dokuments, umfassend:
- Anzeigen (S210), auf einem Anzeigebereich (5), eines ersten handschriftlichen Eingabeelements (EL1) und eines zweiten handschriftlichen Eingabeelements (EL2);
- Erkennen (S220) an einer Eingabeschnittstelle (4) einer Benutzerauswahlgeste (SG), die einen Auswahlbereich (385, 485, 585, 685) definiert, der mindestens einen Teil des ersten handschriftlichen Eingabeelements und mindestens einen Teil des zweiten handschriftlichen Eingabeelements umschließt;
- Auswählen (S230) einer Objektsemantikebene, wobei die ersten und zweiten handschriftlichen Eingabeelemente als mindestens ein erstes Objekt und mindestens ein zweites Objekt der ausgewählten Semantikebene erkannt werden, wobei die Semantikebene einen hierarchischen Erkennungsrang für einen Typ der erkannten Objekte umfasst;
- Auswählen der erkannten Objekte, wobei das Auswählen Folgendes umfasst:
∘ Berechnen (S240) einer ersten Abdeckung (CO1) des umschlossenen Teils des ersten Objekts und einer zweiten Abdeckung (CO2) des umschlossenen Teils des zweiten Objekts;
∘ Einstellen (S250) einer Referenzabdeckung (COR), die der höchsten Abdeckung zwischen der ersten und der zweiten Abdeckung entspricht;
∘ Berechnen (S260) einer Auswahlschwelle (ST) als Funktion der Referenzabdeckung;
∘ Vergleichen (S270) der berechneten ersten und zweiten Abdeckungen mit der Auswahlschwelle;
∘ Identifizieren von mindestens einer berechneten Abdeckung, die höher ist als die Auswahlschwelle; und
∘ Auswählen (S280) der Objekte mit der berechneten Abdeckung; und
- Bearbeiten (S290) der ausgewählten Objekte (ELS) des elektronischen Dokuments.

2. Verfahren nach Anspruch 1, wobei eines oder mehrere der erkannten ersten und zweiten Objekte Textobjekte sind, einschließlich Substriche, Zeichen, Wörter, Zeilen und/oder Absätze.

3. Verfahren nach Anspruch 1 oder 2, wobei eines oder mehrere der erkannten ersten und zweiten Objekte Nicht-Textobjekte sind, einschließlich Primitive, Formen, Behälter und/oder Diagrammen, wobei die Primitive geometrische Grundformen sind.

4. Verfahren nach einem der Ansprüche 1 bis 3, wobei das Berechnen der ersten und zweiten Abdeckungen Folgendes umfasst:
- Identifizieren der vollen Längen der erkannten Objekte;
- Identifizieren von Teillängen des umschlossenen Teils der erkannten Objekte; und
- Berechnen der Abdeckungen des umschlossenen Teils der erkannten Objekte durch Division der Teillängen durch die jeweiligen Volllängen.

5. Verfahren nach Anspruch 4, wobei die volle Länge des erkannten Objekts durch den Pfad des erkannten Objekts und die Teillänge durch den Pfad des erkannten Objekts identifiziert wird, der innerhalb des Auswahlbereichs eingeschlossen ist.

6. Verfahren nach einem der Ansprüche 1 bis 5, wobei das Auswählen der Objektsemantikebene das Setzen der Objektsemantikebene auf eine Ausgangssemantikebene umfasst, wobei das Auswählen der erkannten Objekte entsprechend der Ausgangssemantikebene durchgeführt wird.

7. Verfahren nach Anspruch 6, ferner umfassend das Auswählen einer nächsten Semantikebene und das Durchführen des Auswählens der erkannten Objekte gemäß der nächsten Semantikebenen, bis keine berechnete Abdeckung identifiziert wird.

8. Verfahren nach einem der Ansprüche 1 bis 7, wobei die Semantikebenen zu einer Reihe von Semantikebenen gehören, die Objekte der Ausgangssemantikebene Substriche oder Primitive umfassen, wobei die Primitive geometrische Grundformen sind.

9. Verfahren nach Anspruch 8, wobei die Objekte der Semantikebene neben der Ausgangssemantikebene erkannte Zeichen oder Formen umfassen, die aus den erkannten Objekten der Ausgangssemantikebene zusammengesetzt sind.

10. Verfahren nach Anspruch 9, wobei die Textobjekte der nachfolgenden nächsten Semantikebenen in aufsteigender Reihenfolge erkannte Wörter, Zeilen und Absätze umfassen, die aus den erkannten Objekten der vorherigen Semantikebenen zusammengesetzt sind.

11. Verfahren nach Anspruch 8 oder 9, wobei die Nichttextobjekte der nachfolgenden nächsten Semantikebenen in aufsteigender Reihenfolge erkannte Formen, Behälter und Diagramme umfassen, die aus den erkannten Objekten der vorherigen Semantikebenen zusammengesetzt sind.

12. Rechenvorrichtung (DV) zum Bearbeiten handschriftlicher Eingabeelemente eines elektronischen Dokuments, umfassend:
- einen Anzeigebereich (5), der so konfiguriert ist, dass er ein erstes handschriftliches Eingabeelement und ein zweites handschriftliches Eingabeelement anzeigt;
- eine Eingabeschnittstelle (4), die so konfiguriert ist, dass sie eine Benutzerauswahlgeste erkennt, die einen Auswahlbereich definiert, der mindestens einen Teil des ersten handschriftlichen Eingabeelements und mindestens einen Teil des zweiten handgeschriebenen Eingabeelements umschließt;
- ein Semantikebenen-Auswahlmodul (16), das so konfiguriert ist, dass es eine Semantikebene wählt, wobei die ersten und zweiten handschriftlichen Eingabeelemente als mindestens ein erstes Objekt und mindestens ein zweites Objekt der ausgewählten Semantikebene erkannt werden, wobei die Semantikebene einen hierarchischen Erkennungsrang für einen Typ der erkannten Objekte umfasst;
- ein Objektauswahlmodul (18), das zum Auswählen der erkannten Objekte konfiguriert ist, wobei das Objektauswahlmodul Folgendes umfasst:
∘ ein Abdeckungsberechnungsmodul (182), das so konfiguriert ist, dass es eine erste Abdeckung des umschlossenen Teils des ersten Objekts und eine zweite Abdeckung des umschlossenen Teils des zweiten Objekts berechnet;
∘ ein Referenzeinstellungsmodul (184), das so konfiguriert ist, um eine Referenzabdeckung einzustellen, dass sie der höchsten Abdeckung zwischen der ersten und der zweiten Abdeckung entspricht;
∘ ein Schwellenberechnungsmodul (186), das so konfiguriert ist, dass es eine Auswahlschwelle als Funktion der Referenzabdeckung berechnet;
∘ ein Vergleichsmodul (188), das so konfiguriert ist, dass es die berechneten ersten und zweiten Abdeckungen mit der Auswahlschwelle vergleicht; und
∘ ein Abdeckungsidentifizierungsmodul (190), das so konfiguriert ist, dass es mindestens eine berechnete Abdeckung identifiziert, die höher als die Auswahlschwelle ist; und
- ein Bearbeitungsmodul (20), das zum Bearbeiten der ausgewählten Objekte des elektronischen Dokuments konfiguriert ist.

13. Rechenvorrichtung nach Anspruch 12, wobei das Abdeckungsberechnungsmodul Folgendes umfasst:
- ein Volllängen-Identifizierungsmodul, das so konfiguriert ist, dass es die vollen Längen der erkannten Objekte identifiziert;
- ein Teillängenidentifizierungsmodul, das so konfiguriert ist, dass es Teillängen des umschlossenen Teils der erkannten Objekte identifiziert; und
- ein Divisionsmodul, das so konfiguriert ist, dass es die Abdeckungen des umschlossenen Teils der erkannten Objekte berechnet, indem es die Teillängen durch die jeweiligen vollen Längen dividiert.

14. Rechenvorrichtung nach Anspruch 12 oder 13, wobei das Semantikebenen-Auswahlmodul ein Semantikebenen-Einstellungsmodul umfasst, das so konfiguriert ist, dass es die Objektsemantikebene auf eine Ausgangssemantikebene setzt.

15. Rechenvorrichtung nach einem der Ansprüche 12 bis 14, wobei das Semantikebenen-Auswahlmodul ferner ein nächstes Semantikebenen-Auswahlmodul umfasst, das so konfiguriert ist, dass es das Auswählen der erkannten Objekte gemäß den nächsten Semantikebenen durchführt, bis keine berechnete Abdeckung identifiziert wird.

## Revendications

1. Procédé mis en œuvre par ordinateur pour éditer des éléments d'entrée manuscrits d'un document électronique, comprenant :
- l'affichage (S210), sur une zone d'affichage (5), d'un premier élément d'entrée manuscrit (EL1) et d'un deuxième élément d'entrée manuscrit (EL2) ;
- la détection (S220), sur une interface de saisie (4), d'un geste de sélection (SG) de l'utilisateur définissant une zone de sélection (385, 485, 585, 685) englobant au moins une partie du premier élément d'entrée manuscrit et au moins une partie du deuxième élément d'entrée manuscrit ;
- sélectionner (S230) un niveau sémantique d'objet dans lequel les premier et deuxième éléments d'entrée manuscrits sont reconnus comme au moins un premier objet et au moins un deuxième objet du niveau sémantique sélectionné, ledit niveau sémantique comprenant un rang hiérarchique de reconnaissance pour un type desdits objets reconnus ;
- sélectionner les objets reconnus, la sélection comprenant
∘ le calcul (S240) d'une première couverture (CO1) de la partie englobée du premier objet et d'une deuxième couverture (CO2) de la partie englobée du deuxième objet ;
∘ définir (S250) une couverture de référence (COR) égale à la plus grande des première et deuxième couvertures ;
∘ le calcul (S260) d'un seuil de sélection (ST) en fonction de la couverture de référence ;
∘ la comparaison (S270) des première et deuxième couvertures calculées au seuil de sélection ;
∘ identifier au moins une couverture calculée supérieure au seuil de sélection ; et
∘ sélectionner (S280) les objets présentant ladite couverture calculée ; et
- modifier (S290) les objets sélectionnés (ELS) du document électronique.

2. Procédé selon la revendication 1, dans lequel un ou plusieurs des premiers et seconds objets reconnus sont des objets textuels comprenant des sous-traits, des caractères, des mots, des lignes et/ou des paragraphes.

3. Procédé selon la revendication 1 ou 2, dans lequel un ou plusieurs des premiers et seconds objets reconnus sont des objets non textuels comprenant des primitives, des formes, des conteneurs et/ou des diagrammes, lesdites primitives étant des formes géométriques de base.

4. Procédé selon l'une quelconque des revendications 1 à 3, dans lequel le calcul des première et deuxième couvertures comprend :
- l'identification des longueurs totales des objets reconnus ;
- l'identification des longueurs partielles de la partie englobée des objets reconnus ; et
- le calcul des couvertures de la partie englobée des objets reconnus en divisant les longueurs partielles par les longueurs totales respectives.

5. Procédé selon la revendication 4, dans lequel la longueur totale de l'objet reconnu est identifiée par le tracé de l'objet reconnu et la longueur partielle est identifiée par le tracé de l'objet reconnu contenu dans la zone de sélection.

6. Procédé selon l'une quelconque des revendications 1 à 5, dans lequel la sélection du niveau sémantique de l'objet comprend la définition du niveau sémantique de l'objet à un niveau sémantique initial, la sélection des objets reconnus étant effectuée en fonction dudit niveau sémantique initial.

7. Procédé selon la revendication 6, comprenant en outre la sélection d'un niveau sémantique suivant et la réalisation de la sélection des objets reconnus en fonction des niveaux sémantiques suivants jusqu'à ce qu'aucune couverture calculée ne soit identifiée.

8. Procédé selon l'une quelconque des revendications 1 à 7, dans lequel les niveaux sémantiques appartiennent à un ensemble de niveaux sémantiques, les objets du niveau sémantique initial comprennent des sous-traits ou des primitives, lesdites primitives étant des formes géométriques de base.

9. Procédé selon la revendication 8, dans lequel les objets du niveau sémantique suivant le niveau sémantique initial comprennent des caractères reconnus ou des formes composées des objets reconnus du niveau sémantique initial.

10. Procédé selon la revendication 9, dans lequel les objets textuels des niveaux sémantiques suivants comprennent, par ordre croissant, des mots, des lignes et des paragraphes reconnus, composés des objets reconnus des niveaux sémantiques précédents.

11. Procédé selon la revendication 8 ou 9, dans lequel les objets non textuels des niveaux sémantiques suivants comprennent, par ordre croissant, des formes reconnues, des conteneurs et des diagrammes composés des objets reconnus des niveaux sémantiques précédents.

12. Dispositif informatique (DV) destiné à l'édition d'éléments d'entrée manuscrits d'un document électronique, comprenant :
- une zone d'affichage (5) configurée pour afficher un premier élément d'entrée manuscrit et un deuxième élément d'entrée manuscrit ;
- une interface de saisie (4) configurée pour détecter un geste de sélection de l'utilisateur définissant une zone de sélection englobant au moins une partie du premier élément de saisie manuscrit et au moins une partie du deuxième élément de saisie manuscrit ;
- un module de sélection de niveau sémantique (16) configuré pour sélectionner un niveau sémantique dans lequel les premier et deuxième éléments d'entrée manuscrits sont reconnus comme au moins un premier objet et au moins un deuxième objet du niveau sémantique sélectionné, ledit niveau sémantique comprenant un rang hiérarchique de reconnaissance pour un type desdits objets reconnus ;
- un module de sélection d'objets (18) configuré pour sélectionner les objets reconnus, dans lequel le module de sélection d'objets comprend :
∘ un module de calcul de couverture (182) configuré pour calculer une première couverture de la partie englobée du premier objet et une deuxième couverture de la partie englobée du deuxième objet ;
∘ un module de définition de référence (184) configuré pour définir une couverture de référence égale à la plus grande des première et deuxième couvertures ;
∘ un module de calcul de seuil (186) configuré pour calculer un seuil de sélection en fonction de la couverture de référence ;
∘ un module de comparaison (188) configuré pour comparer les première et deuxième couvertures calculées au seuil de sélection ; et
∘ un module d'identification de couverture (190) configuré pour identifier au moins une couverture calculée supérieure au seuil de sélection ; et
- un module d'édition (20) configuré pour modifier les objets sélectionnés du document électronique.

13. Dispositif informatique selon la revendication 12, dans lequel le module de calcul de couverture comprend :
- un module d'identification de longueur totale configuré pour identifier les longueurs totales des objets reconnus ;
- un module d'identification de longueur partielle configuré pour identifier les longueurs partielles de la partie englobée des objets reconnus ; et
- un module de division configuré pour calculer les couvertures de la partie englobée des objets reconnus en divisant les longueurs partielles par les longueurs totales respectives.

14. Dispositif informatique selon la revendication 12 ou 13, dans lequel le module de sélection de niveau sémantique comprend un module de réglage de niveau sémantique configuré pour régler le niveau sémantique de l'objet sur un niveau sémantique initial.

15. Dispositif informatique selon l'une quelconque des revendications 12 à 14, dans lequel le module de sélection de niveau sémantique comprend en outre un module de sélection de niveau sémantique suivant configuré pour effectuer la sélection des objets reconnus selon des niveaux sémantiques suivants jusqu'à ce qu'aucune couverture calculée ne soit identifiée.
